# EUROPÄISCHE PATENTSCHRIFT

(11) **EP 3 901 453 B1**
(45) Veröffentlichungstag und Bekanntmachung des Hinweises auf die Patenterteilung: **11.01.2023**
(21) Anmeldenummer: 21168511.0
(22) Anmeldetag: 15.04.2021
(51) Int. Cl.: F03D 7/02, F03D 1/06

(54) **PITCHANTRIEB FÜR EIN ROTORBLATT EINER WINDENERGIEANALAGE UND VERFAHREN ZUM BETREIBEN EINES PITCHANTRIEBS**
PITCH DRIVE FOR A ROTOR BLADE OF A WIND TURBINE AND METHOD FOR OPERATING A PITCH DRIVE
ENTRAÎNEMENT DE PAS VARIABLE POUR UNE PALE DE ROTOR D'UNE ÉOLIENNE ET PROCÉDÉ DE FONCTIONNEMENT D'UN ENTRAÎNEMENT DE PAS VARIABLE

(30) Priorität: 23.04.2020 DE 102020002452
(43) Veröffentlichungstag der Anmeldung: 27.10.2021
(73) Patentinhaber: Siemens Gamesa Renewable Energy Service GmbH, 20097 Hamburg (DE)
(72) Erfinder: Warfen, Karsten, 23795 Weede/Söhren (DE); Hopp, Eckart, 24790 Schülldorf (DE)
(74) Vertreter: Glawe, Delfs, Moll

(56) Entgegenhaltungen:
- EP-A1- 2 698 533
- US-A1- 2013 074 335
- US-A1- 2013 243 624

## Beschreibung

Die Erfindung betrifft einen Pitchantrieb für ein Rotorblatt einer Windenergieanlage und ein Verfahren zum Betreiben eines Pitchantriebs. Der Pitchantrieb umfasst einen Elektromotor zum Antreiben einer Drehbewegung zwischen dem Rotorblatt und einer Rotornabe. Die Erfindung betrifft außerdem ein System und ein Verfahren zum Betreiben einer Mehrzahl von Pitchantrieben.

Bei Windenergieanlagen kann die Leistungsaufnahme des Rotors aus dem Wind eingestellt werden, in dem der Anstellwinkel (Pitchwinkel) der Rotorblätter verändert wird. Es ist heute üblich, den Pitchwinkel der einzelnen Rotorblätter im Betrieb der Windenergieanlage laufend anzupassen, beispielsweise um die Leistungsaufnahme konstant zu halten oder um Belastungsspitzen zu vermeiden.

Der Rotor einer Windenergieanlage umfasst eine Rotornabe, an die die Rotorblätter angeschlossen sind. Der Pitchantrieb steht in Eingriff mit der Rotornabe und mit dem Rotorblatt und treibt eine Drehbewegung zwischen den beiden Elementen an, bei der das Rotorblatt um seine Längsachse gedreht wird. Zu dem Pitchantrieb gehört eine Bremse, mit der das Rotorblatt in seiner Position festgehalten werden kann, wenn der Elektromotor nicht in Betrieb ist.

Aus DE 200 17 994 U1 ist ein hybrider Pitchantrieb bekannt, der einen elektrischen Antrieb und einen hydraulischen Antrieb umfasst. Ein weiteres Beispiel aus dem Stand der Technik ist aus EP2698533 A1 bekannt.

Der Erfindung liegt die Aufgabe zugrunde, einen Pitchantrieb und ein zugehöriges Verfahren mit einer flexibel verwendbaren Bremse vorzustellen, die eine hohe Betriebssicherheit bietet. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Der erfindungsgemäße Pitchantrieb umfasst eine Hydraulikpumpe, die durch eine Drehbewegung zwischen dem Rotorblatt und der Rotornabe angetrieben wird. In wenigstens einem Betriebszustand des Pitchantriebs arbeitet die Hydraulikpumpe gegen einen hydraulischen Widerstand.

Durch einen solchen hydraulischen Widerstand kann einer Drehbewegung des Rotorblatts relativ zu der Rotornabe eine Bremskraft entgegengesetzt werden. Die Erfindung hat erkannt, dass ein in dem Pitchantrieb eingesetzter hydraulischer Widerstand verschiedene Anwendungsmöglichkeiten eröffnet und insbesondere eine Erhöhung der Betriebssicherheit einer Windenergieanlage ermöglicht.

Die Hydraulikpumpe des erfindungsgemäßen Pitchantriebs kann in einen hydraulischen Fluidkreislauf eingebunden sein, der sich von einem Ausgang der Hydraulikpumpe bis zu einem Eingang der Hydraulikpumpe erstreckt. Die Hydraulikpumpe kann für einen bidirektionalen Betrieb ausgelegt sein, so dass die Positionen des Eingangs und des Ausgangs der Hydraulikpumpe abhängig vom Betriebszustand wechseln können. Die Hydraulikpumpe kann beispielsweise als Zahnradpumpe, als Drehkolbenpumpe oder als Orbitalpumpe gestaltet sein. Orbitalpumpen sind dem Fachmann beispielsweise aus DE 10 2013 104 245 A1 und DE102016116384A bekannt.

In dem Fluidkreislauf kann ein Schaltventil angeordnet sein, das in einem ersten Schaltzustand den Durchfluss sperrt und in einem zweiten Schaltzustand den Durchfluss freigibt. Das Schaltventil kann auf diese beiden Schaltzustände beschränkt sein, möglich sind auch Schaltventile mit weiteren Zwischenstellungen. In dem ersten Schaltzustand kann der Fluidkreislauf gesperrt sein, so dass die Hydraulikpumpe gegen eine hydraulische Blockade arbeitet. Eine Hydraulikpumpe in hydraulischer Blockade wirkt als Bremse, die in Eingriff ist. Der zweite Schaltzustand, in dem das Schaltventil den Durchfluss freigibt, entspricht einer Bremse im Freilauf. Im Sinne der Erfindung arbeitet die Hydraulikpumpe im ersten Schaltzustand gegen einen hydraulischen Widerstand, vorausgesetzt es gibt keinen anderen Weg, entlang dem der hydraulische Fluidkreislauf geschlossen ist. Das Schaltventil kann so gestaltet sein, dass es im Normalzustand (Fail-Safe-Zustand) geschlossen ist und durch Anlegen eines Steuersignals, insbesondere eines elektrischen Steuersignals geöffnet wird. Dies hat den Vorteil, dass die Hydraulikpumpe bei einem Stromausfall ihre volle Bremswirkung entfalten kann. Ein Rotorblatt, das in einer Stellung feststeht, ist weniger kritisch für die Sicherheit der Windenergieanlage als ein Rotorblatt, das sich unkontrolliert bewegt.

Der Pitchantrieb kann eine Steuereinheit umfassen, die dazu ausgelegt ist, den Elektromotor und/das Schaltventil mit Steuerbefehlen anzusteuern. Die Steuereinheit kann beispielsweise so eingerichtet sein, dass sie das Schaltventil öffnet, wenn der Elektromotor in Betrieb ist, und dass sie das Schaltventil schließt, wenn der Elektromotor nicht in Betrieb ist. Auf diese Weise kann der Elektromotor die Bewegung des Rotorblatts antreiben, ohne gegen einen hohen Widerstand der Hydraulikpumpe zu arbeiten.

In dem Fluidkreislauf kann ein Überströmventil angeordnet sein, das im Normalbetrieb den Durchfluss sperrt und das den Durchfluss freigibt, wenn die Druckdifferenz über dem Überströmventil größer ist als ein vorgegebener Schwellwert. Das Überströmventil kann bidirektional ausgelegt sein, so dass das Öffnen unabhängig davon ist, in welcher Richtung die Druckdifferenz anliegt. Durch ein solches Überströmventil kann ein Überlastungsschutz für das Rotorblatt verwirklicht werden. In einem Zustand der hydraulischen Blockade ist das Rotorblatt grundsätzlich gehindert, sich relativ zu der Rotornabe zu drehen. Durch das Überströmventil kann ein Durchrutschen des Rotorblatts relativ zu der Rotornabe zugelassen werden, wenn das auf das Rotorblatt wirkende Drehmoment zu groß wird und damit die Druckdifferenz über dem Überströmventil den Schwellwert überschreitet. Das Rotorblatt kann durchrutschen, solange das hohe Drehmoment wirkt. Sobald das Drehmoment absinkt, schließt das Überströmventil wieder und die Drehbewegung des Rotorblatts kommt zum Halt. Das Überströmventil kann in diesem Zustand als Druckregler wirken, der den Druck innerhalb eines bestimmten Bereichs konstant hält. Der Schwellwert für die Druckdifferenz, bei der das Überströmventil öffnet, kann beispielsweise zwischen 40 bar und 150 bar, vorzugsweise zwischen 60 bar und 100 bar liegen.

Das Überströmventil kann innerhalb des Fluidkreislaufs parallel zu dem Schaltventil angeordnet sein. Ist das Schaltventil geöffnet, wird in aller Regel keine Druckdifferenz über dem Überströmventil anliegen, so dass das Überströmventil in seinem geschlossenen Normalzustand bleibt. Bei geschlossenem Schaltventil ist der hydraulische Fluidkreislauf blockiert und das Überströmventil ist der Druckdifferenz ausgesetzt, die in dem hydraulischen Fluidkreislauf anliegt. Der Elektromotor kann zum Überfahren des Überströmventils ausgelegt sein, so dass das Rotorblatt auch dann noch bewegt werden kann, wenn in einem Fehlerfall andere Abschnitte des hydraulischen Kreislaufs blockiert sind.

Gegenüber einer als Reibungsbremse gestalteten Bremse hat eine solche hydraulische Bremse den Vorteil, dass es keinen Übergang zwischen Haftreibung und Gleitreibung gibt. Eine hydraulische Bremse kann aus dem Stand heraus in Bewegung versetzt werden, ohne dass die zum Betätigen erforderliche Kraft sprunghaft abnimmt. Die Erfindung hat erkannt, dass diese Eigenschaft der hydraulischen Bremse im Zusammenhang eines Pitchantriebs von Vorteil ist.

Ein Leckfluss in dem Fluidkreislauf kann zur Folge haben, dass das Rotorblatt nicht starr in seiner Position gehalten wird, sondern leicht auswandert. Um dies zu verhindern, kann eine mechanische Sperre vorgesehen sein, die das Rotorblatt unabhängig von der hydraulischen Bremse in seiner Position hält. Die mechanische Sperre kann von der Steuereinheit angesteuert werden.

In dem Fluidkreislauf kann eine Drossel angeordnet sein, die dazu ausgelegt ist, den Durchfluss in einem Abschnitt des Fluidkreislaufs zu begrenzen. Mit einer solchen Drossel kann die Geschwindigkeit begrenzt werden, mit der sich das Rotorblatt relativ zu der Rotornabe drehen kann. Angesichts eines quadratischen Zusammenhangs zwischen der Drehgeschwindigkeit des Rotorblatts und dem hydraulischen Widerstand der Bremse steigt der Widerstand oberhalb einer bestimmten Drehgeschwindigkeit des Rotorblatts sehr schnell an, so dass das Rotorblatt auch dann nicht weiter beschleunigt, wenn es starken Kräften ausgesetzt ist. Eine solche Begrenzung der Maximalgeschwindigkeit ist insbesondere in einem Notbetrieb des Pitchantriebs von Interesse. Kommt es zu einem Fehler im Pitchantrieb, kann die Batterie direkt auf den Elektromotor geschaltet werden, so dass der Elektromotor das Rotorblatt in einem ungeregelten Vorgang in die Fahnenstellung bringt. Wirkt in einer solchen Situation die aerodynamische Kraft in derselben Richtung wie der Elektromotor, so kann dies zu einer übermäßigen Drehgeschwindigkeit des Rotorblatts führen. Mit einer Drossel in dem Fluidkreislauf kann verhindert werden, dass die Drehgeschwindigkeit des Rotorblatts über ein gewünschtes Maß hinaus ansteigt.

Um zu verhindern, dass die Hydraulikpumpe auch im Normalbetrieb gegen einen unnötigen Widerstand arbeitet, kann der hydraulische Fluidkreislauf so gestaltet sein, dass die Drossel nur in ausgewählten Betriebszuständen aktiv wird. Möglich ist beispielsweise eine schaltbare Drossel, deren Durchfluss einstellbar ist. In einer anderen Ausführungsform ist die Drossel innerhalb des Fluidkreislaufs parallel zu dem Schaltventil und/oder zu dem Überströmventil geschaltet und mit einer Schalteinrichtung ausgestattet, die den Durchfluss durch die Drossel wahlweise sperrt oder freigibt. Die Drossel begrenzt den hydraulischen Fluss, was bedeutet, dass der hydraulische Fluss durch die geöffnete Drossel kleiner ist als der hydraulische Fluss durch das geöffnete Schaltventil. Die Schalteinrichtung kann so gestaltet sein, dass die Drossel im Normalbetrieb geschlossen ist und geöffnet wird, wenn der Pitchantrieb in einen Notbetrieb übergeht. Insbesondere kann die Schalteinrichtung geöffnet werden, wenn der Elektromotor das Rotorblatt in einem ungeregelten Betrieb antreibt.

Der Elektromotor kann eine Motorwelle umfassen, mit der ein mit dem Rotorblatt in Eingriff stehendes Ritzel angetrieben wird. Das Ritzel kann mit einem Zahnkranz des Rotorblatts in Eingriff stehen, so dass das Rotorblatt relativ zu der Rotornabe bewegt wird, wenn das Ritzel sich dreht. In einer Ausführungsform sitzt das Ritzel auf der Motorwelle des Elektromotors, so dass die Motorwelle zugleich die Ritzelwelle bildet. Möglich ist auch, dass die Motorwelle von der Ritzelwelle separat ist und dass die Ritzelwelle über ein Getriebe mit der Motorwelle in Eingriff steht. Das Getriebe kann ein oder mehrere Zwischenwellen umfassen, über die das Drehmoment zwischen der Motorwelle und der Ritzelwelle übertragen wird.

Der Pitchantrieb kann so ausgelegt sein, dass die Hydraulikpumpe mit der Motorwelle gekoppelt ist, so dass der Elektromotor zugleich als Antrieb für die Hydraulikpumpe wirkt. Dazu kann die Hydraulikpumpe in einem direkten Eingriff mit der Motorwelle stehen. Möglich ist auch eine indirekte Kopplung zwischen der Hydraulikpumpe und dem Elektromotor, beispielsweise indem die Hydraulikpumpe mit der Ritzelwelle, mit einer zwischen der Ritzelwelle und der Motorwelle angeordneten Zwischenwelle oder mit einer separaten Welle in Eingriff steht, wobei die separate Welle ihrerseits mit dem Zahnkranz des Rotorblatts gekoppelt ist. Die separate Welle kann in einem direkten Eingriff mit dem Zahnkranz des Rotorblatts in Eingriff stehen oder über ein Getriebe mit dem Zahnkranz des Rotorblatts gekoppelt sein. Die Verwendung einer separaten Welle hat den Vorteil, dass die Bremswirkung der Hydraulikpumpe auch dann zur Verfügung stehen kann, wenn das Getriebe zwischen dem Elektromotor und dem Rotorblatt ausfällt.

Besonders bevorzugt ist die Anordnung der Hydraulikpumpe auf der Motorwelle. Hierzu kann der Motor auf der einen Seite die Antriebswelle aufweisen, die mit dem Getriebe oder dem Ritzel gekoppelt ist. Auf der gegenüberliegenden Seite kann vorteilhaft ein zweiter Wellenstummel angeordnet sein, an dem die Hydraulikpumpe angeordnet wird.

Der Rotor einer Windenergieanlage hat üblicherweise eine Mehrzahl von Rotorblättern, in vielen Fällen drei Rotorblätter. Die Erfindung betrifft auch einen Rotor, bei dem jedes der Rotorblätter mit einem solchen Pitchantrieb ausgestattet ist, sowie eine Windenergieanlage mit einem solchen Rotor.

Die Erfindung betrifft außerdem ein System aus einer Mehrzahl von Pitchantrieben, wobei jeder Pitchantrieb eine Hydraulikpumpe umfasst und wobei eine erste Verbindungsleitung sich zwischen der Hydraulikpumpe des ersten Pitchantriebs und der Hydraulikpumpe des zweiten Pitchantriebs erstreckt. Ein solches System hat eigenständigen erfinderischen Gehalt, auch ohne dass eine Hydraulikpumpe in wenigstens einem Betriebszustand gegen einen hydraulischen Widerstand arbeitet.

Das System kann eine als Rückleitung ausgebildete zweite Verbindungsleitung umfassen, so dass sich von der ersten Hydraulikpumpe zu der zweiten Hydraulikpumpe zurück zu der ersten Hydraulikpumpe ein geschlossener Fluidkreislauf ergibt. Ein geschlossener Fluidkreislauf, der sich durch mehrere Pitchantriebe erstreckt, wird nachfolgend als großer Fluidkreislauf bezeichnet. Im Unterschied dazu ist ein Fluidkreislauf, der sich innerhalb eines Pitchantriebs zwischen dem Ausgang der Hydraulikpumpe und dem Eingang der Hydraulikpumpe erstreckt, ein kleiner Fluidkreislauf.

Der große Fluidkreislauf kann ein Schaltventil umfassen, das beispielsweise in der Verbindungsleitung zwischen dem ersten Pitchantrieb und dem zweiten Pitchantrieb angeordnet sein kann. Ein Schaltventil des großen Fluidkreislaufs wird nachfolgend als zweites Schaltventil bezeichnet. Im Unterschied dazu ist ein Schaltventil in einem kleinen Fluidkreislauf ein erstes Schaltventil. Sowohl ein erstes Schaltventil als auch ein zweites Schaltventil können in einem erfindungsgemäßen System mehrfach vorkommen. Zweite Schaltventile können dieselben technischen Merkmale haben wie erste Schaltventile.

Sind zwei Pitchantriebe durch einen großen Fluidkreislauf miteinander gekoppelt, können verschiedene Fehlerfälle aufgefangen werden. Ist ein erstes Schaltventil in dem kleinen Fluidkreislauf eines ersten Pitchantriebs defekt und lässt sich nicht mehr öffnen, so kann das zweite Schaltventil geöffnet werden, um den hydraulischen Fluss durch den großen Fluidkreislauf zu führen. Ist in diesem Fall das erste Schaltventil des zweiten Pitchantriebs geschlossen, so sind die Hydraulikpumpen der beiden Pitchantriebe starr miteinander gekoppelt und drehen mit der gleichen Geschwindigkeit. Dies gilt auch dann, wenn der erste Pitchantrieb keinen kleinen Fluidkreislauf aufweist.

Durch Öffnen des ersten Schaltventils des zweiten Pitchantriebs kann die Geschwindigkeit der zweiten Hydraulikpumpe relativ zu der Geschwindigkeit der ersten Hydraulikpumpe verändert werden. Lässt sich zusätzlich auch das erste Schaltventil des zweiten Pitchantriebs nicht mehr öffnen, so sind die Hydraulikpumpen der beiden Pitchantriebe zwangsweise miteinander gekoppelt. Im Sinne der Erfindung bildet eine zweite Hydraulikpumpe, die durch eine erste Hydraulikpumpe angetrieben wird, einen hydraulischen Widerstand für die erste Hydraulikpumpe. Der Begriff Hydraulikpumpe gilt auch dann, wenn eine Hydraulikpumpe in bestimmten Betriebszuständen motorisch arbeitet.

Ist der Elektromotor des ersten Pitchantriebs ausgefallen, so kann das erste Schaltventil dieses Pitchantriebs geschlossen werden, um eine unkontrollierte Drehbewegung des angeschlossenen Rotorblatts zu verhindern. Durch Öffnen des zweiten Schaltventils kann der erste Pitchantrieb über den großen Fluidkreislauf mit dem zweiten Pitchantrieb gekoppelt werden, so dass das erste Rotorblatt synchron zu dem zweiten Rotorblatt angetrieben wird. Durch zeitweises Öffnen des ersten Schaltventils des zweiten Pitchantriebs kann die Drehgeschwindigkeit des ersten Rotorblatts relativ zur Drehgeschwindigkeit des zweiten Rotorblatts reduziert werden. Dies kann genutzt werden, um die Anstellwinkel der Rotorblätter miteinander zu synchronisieren. Wenn beide Rotorblätter auf denselben Anstellwinkel synchronisiert sind, kann zu einer starren hydraulischen Kopplung der beiden Pitchantriebe übergegangen werden, indem das erste Schaltventil des zweiten Pitchantriebs geschlossen wird.

Das System von Pitchantrieben kann eine Steuereinheit umfassen, die die ersten Schaltventile, die zweiten Schaltventile und/oder die Elektromotoren der Pitchantriebe ansteuert. Die Steuerbefehle können insbesondere so aufeinander abgestimmt sein, dass sich einer oder mehrere der beschriebenen Abläufe verwirklicht werden können.

Durch die erfindungsgemäße hydraulische Kopplung der Pitchantriebe wird es möglich, den Pitchwinkel eines Rotorblatts auch dann noch zu verändern, wenn der Elektromotor des zugehörigen Pitchantriebs ausgefallen ist. Dies ist ein Vorteil gegenüber bisherigen Systemen, bei denen die Windenergieanlage so ausgelegt werden musste, dass sie den bei einem festsitzenden Rotorblatt auftretenden Belastungen standhält. Kann dieser Fall ausgeschlossen werden, muss der zugehörige Belastungsfall bei der Auslegung einer Windenergieanlage nicht mehr berücksichtigt werden. Die Wahrscheinlichkeit eines festsitzenden Rotorblatts kann weiter reduziert werden, wenn das Blattlager als Rollenlager ausgestaltet ist. Gegenüber den bisher üblichen Vierpunktlagern ist das Risiko eines Festklemmens bei Rollenlagern deutlich reduziert.

Wenn die Hydraulikpumpe eines Pitchantriebs gegen einen Widerstand arbeitet, steigt der Druck am Ausgang der Hydraulikpumpe an und sinkt am Eingang der Hydraulikpumpe ab. Ist der Druckabfall am Eingang der Hydraulikpumpe so stark, dass sich ein Unterdruck einstellt, kann es zu Kavitation in der Hydraulikflüssigkeit kommen. Um dies zu verhindern, kann in dem Fluidkreislauf ein Druckkompensator angeordnet sein, der dazu ausgelegt ist, auch auf der Eingangsseite der Hydraulikpumpe einen Überdruck von wenigstens 1 bar, vorzugsweise wenigstens 3 bar aufrechtzuerhalten. Der Druckkompensator kann beispielsweise als Membranspeicher ausgestaltet sein, bei dem ein Gasvolumen durch eine Membran abgetrennt ist und bei der der Gasdruck über die Membran auf die Hydraulikflüssigkeit wirkt. Das Gasvolumen kann beispielsweise mit Stickstoff gefüllt sein. Das Gasvolumen kann so bemessen sein, dass die Hydraulikflüssigkeit in dem betreffenden Abschnitt des Fluidkreislaufs ständig unter Überdruck gehalten wird. Zusätzlich oder alternativ dazu kann das Gasvolumen so bemessen sein, dass die thermische Ausdehnung ausgeglichen wird. In beiden Fällen ist ein kleines Volumen ausreichend. Beispielsweise kann das Volumen des Druckkompensators kleiner sein als 500 ml, vorzugsweiser kleiner sein als 200 ml, weiter vorzugsweise kleiner sein als 100 ml. Der Druckkompensator ist nicht so bemessen, dass die in ihm gespeicherte Energie ausreicht, um eine Hydraulikpumpe anzutreiben.

Es kann ein Druckkompensator in einem kleinen Fluidkreislauf eines Pitchantriebs angeordnet sein. Bei einem System aus mehreren Pitchantrieben kann jeder Pitchantrieb einen Druckkompensator aufweisen. Zusätzlich oder alternativ dazu kann ein mehrere Pitchantriebe umfassender großer Fluidkreislauf mit einem oder mehreren Druckkompensatoren ausgestattet sein.

In einer Ausführungsform kann die mit der Hydraulikpumpe eines Pitchantriebs geleistete Arbeit genutzt werden, um einen Zwischenspeicher aufzuladen. In dem Zwischenspeicher kann die Hydraulikflüssigkeit unter Druck gespeichert werden. In einem anderen Betriebszustand des Pitchantriebs kann die in dem Zwischenspeicher gespeicherte Energie genutzt werden, um die Hydraulikpumpe eines Pitchantriebs in Bewegung zu versetzen. Die Kapazität des Zwischenspeichers kann so bemessen sein, dass eine aus dem vollständig geladenen Zwischenspeicher angetriebene Hydraulikpumpe wenigstens 2 Umdrehungen, vorzugsweise wenigstens 5 Umdrehungen, weiter vorzugsweise wenigstens 10 Umdrehungen eines mit dem Zahnkranz des Rotorblatts in Eingriff stehenden Ritzels antreibt. Insbesondere kann die Kapazität des Zwischenspeichers so bemessen sein, dass ein Rotorblatt des Rotors oder vorzugsweise alle Rotorblätter des Rotors aus ihrer Betriebsstellung in die Fahnenstellung gebracht werden können. Der Zwischenspeicher kann ein passiver Zwischenspeicher sein in dem Sinne, dass die Hydraulikpumpen der Pitchantriebe das einzige Mittel sind, mit dem der Zwischenspeicher aufgeladen werden kann.

Das erfindungsgemäße Antriebssystem kann mehr als zwei Pitchantriebe, insbesondere drei Pitchantriebe umfassen. Dabei können alle Pitchantriebe des Systems in dem großen Fluidkreislauf in Reihe geschaltet sein. Wenn der große Fluidkreislauf geöffnet ist und die ersten Schaltventile allesamt geschlossen sind, sind alle Pitchantriebe starr miteinander gekoppelt. Durch selektives Schalten der ersten Schaltventile kann die Kopplung der Pitchantriebe ganz oder teilweise aufgehoben werden.

Die Erfindung betrifft außerdem ein Verfahren zum Betreiben eines Pitchantriebs einer Windenergieanlage, bei dem ein Rotorblatt mit einem Elektromotor relativ zu einer Rotornabe gedreht wird und bei dem durch die Drehbewegung zwischen dem Rotorblatt und der Rotornabe eine Hydraulikpumpe angetrieben wird. Die Hydraulikpumpe arbeitet in wenigstens einem Betriebszustand gegen einen hydraulischen Widerstand.

Die Erfindung betrifft ferner ein Verfahren zum Betreiben einer Mehrzahl von Pitchantrieben. Ein erstes Rotorblatt wird mit einem ersten Elektromotor relativ zu einer Rotornabe gedreht. Durch die Drehbewegung zwischen dem ersten Rotorblatt und der Rotornabe wird eine erste Hydraulikpumpe angetrieben. Ein zweites Rotorblatt wird mit einem zweiten Elektromotor relativ zu der Rotornabe gedreht. Durch die Drehbewegung zwischen dem zweiten Rotorblatt und der Rotornabe wird eine zweite Hydraulikpumpe angetrieben. Die erste Hydraulikpumpe und die zweite Hydraulikpumpe sind durch eine hydraulische Verbindungsleitung verbunden, wobei in wenigstens einem Betriebszustand Hydrauliköl von der ersten Hydraulikpumpe zu der zweiten Hydraulikpumpe gepumpt wird.

Die Verfahren können mit weiteren Merkmalen fortgebildet werden, die im Zusammenhang des erfindungsgemäßen Pitchantriebs oder des erfindungsgemäßen Systems beschrieben sind. Umgekehrt können der Pitchantrieb und das System mit Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine mit einem erfindungsgemäßen Pitchantrieb ausgestattete Windenergieanlage;

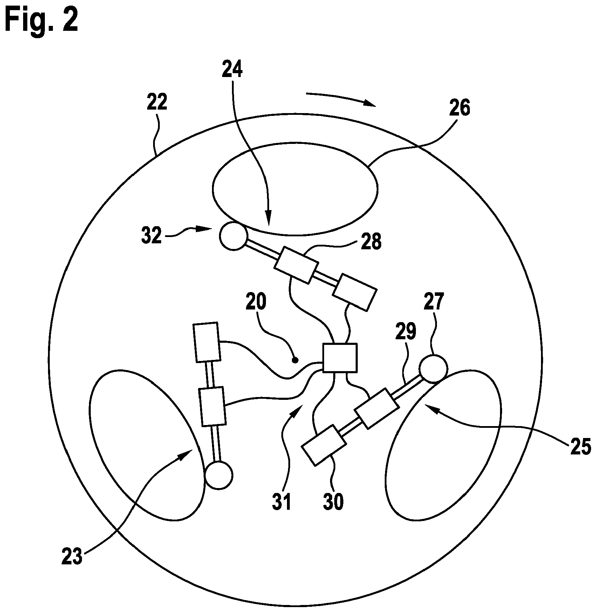

- Fig. 2:: eine schematische Darstellung einer Rotornabe mit drei erfindungsgemäßen Pitchantrieben;
- Fig. 3:: eine Ausführungsform eines erfindungsgemäßen Pitchantriebs;
- Fig. 4:: eine alternative Ausführungsform eines erfindungsgemäßen Pitchantriebs;
- Fig. 5:: ein erfindungsgemäßes System aus einer Mehrzahl von Pitchantrieben.

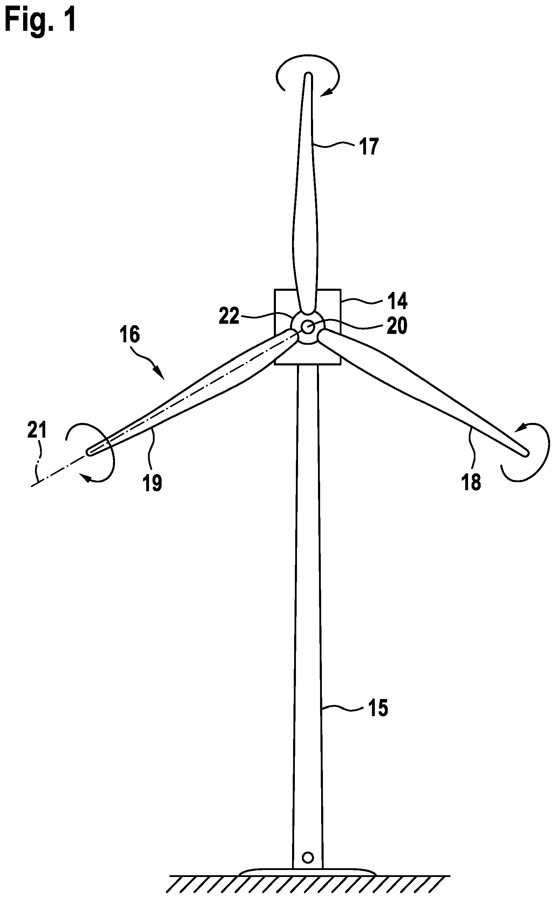

Bei einer in Fig. 1 gezeigten Windenergieanlage ist eine Gondel 14 drehbar auf einem Turm 15 angeordnet. Die Gondel trägt einen Rotor 16 mit einer Rotornabe 22 und drei Rotorblättern 17, 18, 19. Der Rotor 16 ist um eine Rotorachse 20 drehbar gelagert und treibt über eine Rotorwelle einen Generator an, der in dem Gehäuse der Gondel 14 aufgenommen ist. Die Gondel 14 kann relativ zu dem Turm 15 gedreht werden, um den Rotor 16 in Windrichtung auszurichten.

Die Leistungsaufnahme des Rotors 16 aus dem Wind wird durch Verändern des Pitchwinkels der Rotorblätter 17, 18, 19 eingestellt. Zum Einstellen des Pitchwinkels werden die Rotorblätter 17, 18, 19 um eine Rotor-Längsachse 21 gedreht, die am Beispiel des Rotorblatts 19 angedeutet ist. Die Blattlager zwischen den Rotorblättern 17, 18, 19 sind bevorzugt als Rollenlager ausgebildet.

Im Innenraum der Rotornabe 22 sind drei Pitchantriebe 23, 24, 25 angeordnet, die dazu ausgelegt sind, die Pitchwinkel der Rotorblätter 17, 18, 19 einzustellen. Die Rotorblätter 17, 18, 19 sind im Bereich der Blattwurzel jeweils mit einem Zahnkranz 26 ausgestattet, der mit einem Ritzel 27 des Pitchantriebs in Eingriff steht. Das Ritzel 27 wird über einen Elektromotor 28 und einer Antriebswelle 29 in Drehung versetzt. Das Ritzel 27 und der Zahnkranz 26 bilden ein Getriebe 32, mit dem die Drehung des Ritzels 27 in eine Drehung des an den Zahnkranz 26 angeschlossenen Rotorblatts 17, 18, 19 umgesetzt wird. Üblicher Weise befindet sich zwischen Elektromotor 28 und Ritzel 27 ein weiteres Getriebe, welches aus Vereinfachungsgründen nicht dargestellt ist. Die Antriebswelle 29 erstreckt sich als Motorwelle durch den Elektromotor 28 hindurch bis zu einer Hydraulikpumpe 30, so dass mit der Drehung der Antriebswelle 29 auch die Hydraulikpumpe 30 angetrieben wird. Die Funktion der Hydraulikpumpe 30 mit den weiteren hydraulischen Komponenten wird unten näher erläutert.

In der Rotornabe 22 ist außerdem eine Steuereinheit 31 angeordnet, die das Zusammenspiel der Pitchantriebe 23, 24, 25 steuert. Die Steuereinheit 31 ist über Steuerleitungen mit den Elektromotoren 28 und hydraulischen Schaltelementen aller Pitchantriebe 23, 24, 25 verbunden und versorgt diese Komponenten mit den erforderlichen Steuerbefehlen.

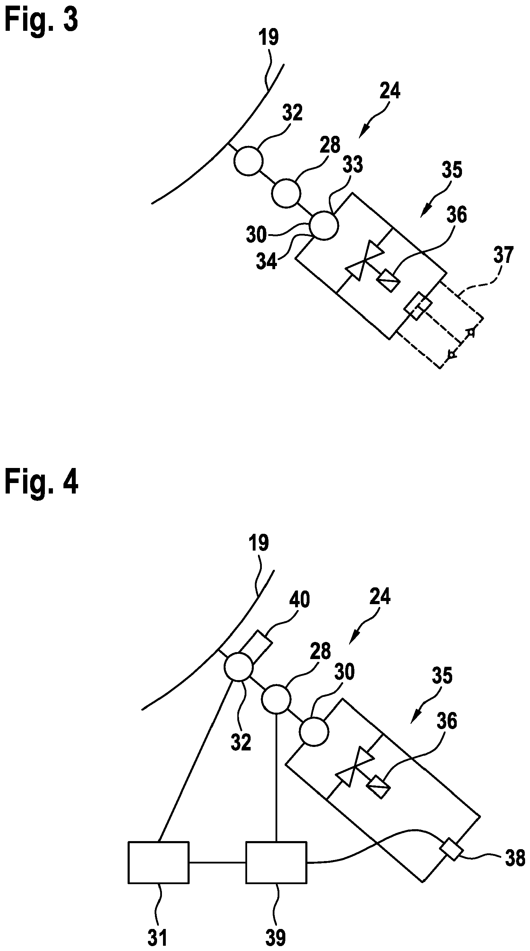

Bei dem in Fig. 3 gezeigten Pitchantrieb erstreckt sich ein kleiner Fluidkreislauf 35 von einem Ausgang 33 der Hydraulikpumpe 30 bis zu einem Eingang 34 der Hydraulikpumpe 30. In dem Fluidkreislauf 35 sind ein elektrisch betätigtes erstes Schaltventil 36 und ein Überströmventil 37 parallel geschaltet. Die Hydraulikflüssigkeit läuft in dem Fluidkreislauf 35 im Wesentlichen frei um, wenn entweder das erste Schaltventil 36 oder das Überströmventil 37 geöffnet ist. Sind sowohl das erste Schaltventil 36 als auch das Überströmventil 37 geschlossen, so ist der Fluidkreislauf 35 blockiert und die Hydraulikpumpe 30 kann nicht gedreht werden. In diesem Zustand wirkt die Hydraulikpumpe 30 als Bremse, die das Rotorblatt 19 in seiner Position festhält.

Das Überströmventil 37 öffnet, wenn zwischen dem Ausgang 33 und dem Eingang 34 der Hydraulikpumpe eine Druckdifferenz von beispielsweise mehr als 70 bar anliegt. Eine solche Druckdifferenz kann auftreten, wenn von dem Rotorblatt 19 ein sehr hohes Drehmoment auf die Hydraulikpumpe 30 wirkt. Indem das Überströmventil 37 öffnet, wird eine Drehbewegung der Hydraulikpumpe 30 und damit eine Drehbewegung des Rotorblatts 19 zugelassen. Mit einem solchen Durchrutschen der Bremse können auf das Rotorblatt 19 wirkende Belastungsspitzen abgemildert werden. Das Überströmventil 37 schließt wieder, wenn die von dem Rotorblatt 19 ausgeübte Kraft absinkt und die Druckdifferenz über dem Überströmventil 37 unter den beispielhaften Schwellwert von 70 bar fällt.

Kommt von der Steuereinheit 31 der Befehl, den Pitchwinkel des Rotorblatts 19 anzupassen, so werden der Elektromotor 28 und das erste Schaltventil 36 synchron angesteuert. Das erste Schaltventil 36 wird geöffnet, damit der Elektromotor 28 nicht gegen eine hydraulische Blockade in dem Fluidkreislauf 35 arbeitet. Ist der gewünschte Pitchwinkel eingestellt, wird der Elektromotor 28 zum Stillstand gebracht und das erste Schaltventil 36 geschlossen, so dass das Rotorblatt 19 wieder durch die hydraulische Blockade in dem Fluidkreislauf 35 gebremst ist.

Zur Erhöhung der Ausfallsicherheit kann der Elektromotor 28 so bemessen sein, dass er bei vollem Leistungseinsatz eine zum Öffnen des Überströmventils 37 ausreichende Druckdifferenz über der Hydraulikpumpe 30 erzeugen kann. Dadurch wird es möglich, den Pitchwinkel des Rotorblatts 19 auch dann zu verstellen, wenn das erste Schaltventil 36 defekt ist und sich nicht mehr öffnen lässt.

Bei der alternativen Ausführungsform gemäß Fig. 4 ist in dem kleinen Fluidkreislauf 35 eine schaltbare Drossel 38 parallel zu dem ersten Schaltventil 36 angeordnet. Die schaltbare Drossel 38 ist im Normalbetrieb geschlossen. Im Falle eines Fehlers in der Steuereinheit 31 wird eine Notstrom-Batterie 39 direkt auf die schaltbare Drossel 38 und den Elektromotor 28 geschaltet, so dass die Drossel 38 geöffnet wird und der Elektromotor 28 das Rotorblatt 19 in einer ungeregelten Fahrt in Richtung Fahnenstellung bewegt. Durch die Drossel 38 wird der hydraulische Fluss in dem kleinen Fluidkreislauf 35 begrenzt, womit zugleich die Drehgeschwindigkeit des Rotorblatts 19 auf einen Maximalwert begrenzt wird. Damit kann sichergestellt werden, dass die Drehung des Rotorblatts 19 auch dann nicht zu schnell wird, wenn beispielsweise die Kraft des Elektromotors 28 und die aerodynamische Kraft in dieselbe Richtung wirken.

Das Getriebe 32 ist zusätzlich mit einer mechanischen Sperre 40 ausgestattet, die ebenfalls von der Steuereinheit 31 angesteuert wird. Die mechanische Sperre 40 wird so angesteuert, dass sie im Eingriff ist, wenn das erste Schaltventil 36 geschlossen ist. Mit der mechanischen Sperre 40 kann das Rotorblatt 19 auch dann in seiner Position gehalten werden, wenn mit der hydraulischen Bremse ein leichtes Auswandern aufgrund von internem Leckfluss nicht verhindert werden kann.

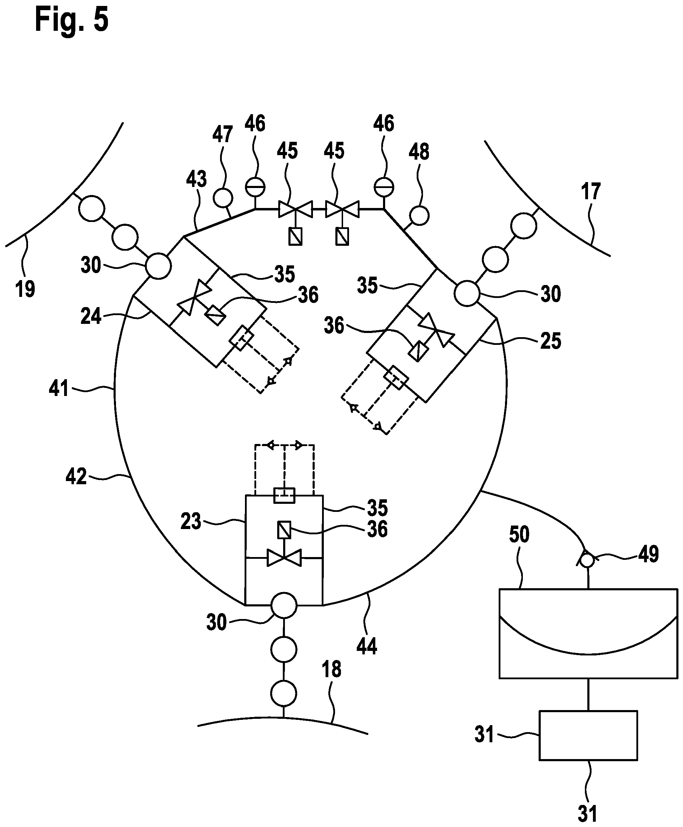

Bei der Ausführungsform gemäß Fig. 5 sind die drei Pitchantriebe 23, 24, 25 des Rotors 16 zu einem hydraulischen System miteinander verbunden. Der Aufbau der einzelnen Pitchantriebe 23, 24, 25 entspricht jeweils der in Fig. 3 gezeigten Ausführungsform. Zwischen den Pitchantrieben 23, 24, 25 erstrecken sich Verbindungsleitungen 42, 43, 44, mit denen die Pitchantriebe 23, 24, 25 in einem großen Fluidkreislauf 41 miteinander verbunden werden.

In der Verbindungsleitung 43 zwischen den Pitchantrieben 24, 25 sind zwei zweite Schaltventile 45 angeordnet, die in ihrem Aufbau und ihrer Funktion den ersten Schaltventilen 36 entsprechen. Die zweiten Schaltventile 45 werden ebenfalls von der Steuereinheit 31 angesteuert. Die zweiten Schaltventile 45 sind eingeschlossen zwischen zwei Druckkompensatoren 46, die eine eventuelle Temperaturausdehnung ausgleichen und dafür sorgen, dass in keinem Betriebszustand ein Unterdruck in den Hydraulikleitungen entsteht. Mit einem Temperatursensor 47 wird die Temperatur der Hydraulikflüssigkeit überwacht, mit einem Drucksensor 48 wird der Druck der Hydraulikflüssigkeit überwacht.

Die von einer Hydraulikpumpe 30 geförderte Hydraulikflüssigkeit kann sich entweder entlang dem kleinen Fluidkreislauf 35 des betreffenden Pitchantriebs bewegen oder entlang dem großen Fluidkreislauf 41, der sich durch alle Pitchantriebe 23, 24, 25 erstreckt. Die Kombination aus kleinen Hydraulikkreisläufen 35 und einem großen Fluidkreislauf 41 hat Vorteile in verschiedenen Fehlerfällen.

Ein möglicher Fehlerfall ist, dass das erste Schaltventil 36 eines Pitchantriebs 23 defekt ist und sich nicht mehr öffnen lässt. In diesem Fall können die zweiten Schaltventile 45 durch ein Steuersignal von der Steuereinheit 31 geöffnet werden, um den großen Fluidkreislauf 41 freizugeben. Damit die Hydraulikflüssigkeit den Weg entlang dem großen Fluidkreislauf nehmen kann, werden von der Steuereinheit 31 die ersten Schaltventilen 36 der anderen Pitchantriebe 24, 25 geöffnet. Gleichzeitig werden die Elektromotoren 28 der anderen Pitchantriebe 24, 25 angesteuert, um die dort angeschlossenen Rotorblätter 17, 18 ebenfalls zu drehen oder um eine unerwünschte Drehung dieser Rotorblätter zu verhindern. Trotz des Ausfalls eines ersten Schaltventils 36 können auf diese Weise alle Rotorblätter 17, 18, 19 unabhängig voneinander auf die gewünschten Pitchwinkel eingestellt werden.

Fallen die ersten Schaltventile 36 zweier Pitchantriebe 23, 24 gleichzeitig aus und lassen sich nicht mehr öffnen, so führt dies zur einer Zwangskopplung der betreffenden Pitchantriebe 23, 24. Die Pitchwinkel der angeschlossenen Rotorblätter 18, 19 können nur synchron miteinander verändert werden. Es ist damit nur noch ein eingeschränkter Betrieb der Windenergieanlage möglich, der aber in jedem Fall ausreicht, um die Anlage sicher zum Stillstand zu bringen.

Fällt der Elektromotor 28 eines Pitchantriebs 23 aus, so kann das angeschlossene Rotorblatt 18 durch Schließen des ersten Schaltventils 36 in seiner Position gehalten werden. Soll der Pitchwinkel des Rotorblatts 18 verändert werden, so kann dies über eine Zwangskopplung in dem großen Fluidkreislauf 41 erfolgen. Bei zunächst geschlossenem Zustand der zweiten Schaltventile 45 kann ein benachbartes Rotorblatt 19 auf einen zu dem Rotorblatt 18 passenden Pitchwinkel eingestellt werden. Anschließend können die zweiten Schaltventile 45 geöffnet werden und das erste Schaltventil 36 des Rotorblatts 19 geöffnet werden, so dass sich eine hydraulische Zwangskopplung zwischen den Hydraulikpumpen 30 der Rotorblätter 18, 19 gibt. Mit dem Elektromotor 28 des Rotorblatts 19 können die beiden Rotorblätter 18, 19 jetzt synchron verstellt werden. Ein entsprechender Notbetrieb ist sogar möglich, wenn zwei Elektromotoren 28 gleichzeitig ausfallen.

Auch im Normalbetrieb der Windenergieanlage, in dem keine Komponente des Pitchantriebs ausgefallen ist, kann der Fluidkreislauf 41 zur gegenseitigen Unterstützung der Pitchantriebe 23, 24, 25 genutzt werden. Es kann davon ausgegangen werden, dass die aerodynamischen Belastungen der Rotorblätter einer 120°-Phasenverschiebung unterliegen. Soll der Pitchwinkel von zwei Rotorblättern verändert werden, wobei dies bei einem Rotorblatt durch die aerodynamische Kraft unterstützt wird, während die Kraft bei dem anderen Blatt der Drehung des Rotorblatts entgegenwirkt, so kann die überschüssige aerodynamische Energie von dem einen Rotorblatt über den großen Fluidkreislauf 41 zu dem anderen Rotorblatt übertragen werden, um den Elektromotor 28 dieses Rotorblatts zu unterstützen.

An den großen Fluidkreislauf 41 ist außerdem ein in der Figur vereinfacht dargestellter Zwischenspeicher 50 angeschlossen. In der Anschlussleitung zwischen dem großen Fluidkreislauf 41 und dem Zwischenspeicher 50 ist ein Rückschlagventil 49 angeordnet, so dass Hydraulikflüssigkeit gegen den in dem Zwischenspeicher 50 herrschenden Druck in den Zwischenspeicher 50 eingebracht werden kann und dort gespeichert werden kann. Kommt es zu einem Ausfall des elektrischen Systems, so kann die in dem Zwischenspeicher 50 gespeicherte Energie verwendet werden, um die Rotorblätter 17, 18, 19 hydraulisch angetrieben in die Fahnenstellung zu bringen.

Die Steuereinheit 31 ist so eingerichtet, dass bei einem Stromausfall ein Steuersignal abgegeben wird, gemäß dem die in dem Zwischenspeicher 50 gespeicherte Energie abgerufen wird und gemäß dem die ersten und zweiten Schaltventile 36, 45 so gestaltet werden, dass die Rotorblätter 17, 18, 19 sich in Richtung Fahnenstellung drehen.

## Patentansprüche

1. Pitchantrieb für ein Rotorblatt (17, 18, 19) einer Windenergieanlage, mit einem Elektromotor (28) zum Antreiben einer Drehbewegung zwischen dem Rotorblatt (17, 18, 19) und einer Rotornabe (22), mit einer Hydraulikpumpe (30), die durch die Drehbewegung zwischen dem Rotorblatt (17, 18, 19) und der Rotornabe (22) angetrieben wird, wobei die Hydraulikpumpe (30) in wenigstens einem Betriebszustand gegen einen hydraulischen Widerstand (36, 37, 38, 45, 25) arbeitet.

2. Pitchantrieb nach Anspruch 1, **dadurch gekennzeichnet, dass** die Hydraulikpumpe (30) in einen Fluidkreislauf (35, 41) eingebunden ist, der sich von einem Ausgang (33) der Hydraulikpumpe (30) bis zu einem Eingang (34) der Hydraulikpumpe (30) erstreckt.

3. Pitchantrieb nach Anspruch 1 oder 2, **dadurch gekennzeichnet, dass** in dem Fluidkreislauf (35, 41) ein Schaltventil (35, 41) angeordnet ist, das in einem ersten Schaltzustand den Durchfluss sperrt und in einem zweiten Schaltzustand den Durchfluss freigibt, wobei insbesondere in dem ersten Schaltzustand des Schaltventils (35, 41) der Fluidkreislauf (35, 41) gesperrt ist, so dass die Hydraulikpumpe (30) gegen eine hydraulische Blockade arbeitet.

4. Pitchantrieb nach Anspruch 3, **gekennzeichnet durch** eine Steuereinheit (31), die das Schaltventil (36) öffnet, wenn der Elektromotor (28) in Betrieb ist, und das Schaltventil (36) schließt, wenn der Elektromotor (28) nicht in Betrieb ist.

5. Pitchantrieb nach Anspruch 3 oder 4, **gekennzeichnet durch** ein Überströmventil (37), das in dem Fluidkreislauf (35) parallel zu dem Schaltventil (36) angeordnet ist und/oder durch eine schaltbare Drossel (38), die in dem Fluidkreislauf (35) parallel zu dem Schaltventil (36) angeordnet ist.

6. Pitchantrieb nach einem der Ansprüche 1 bis 5, **dadurch gekennzeichnet, dass** die Hydraulikpumpe (30) mit einer Motorwelle (29) des Elektromotors (28) gekoppelt ist.

7. Pitchantrieb nach einem der Ansprüche 1 bis 6, **dadurch gekennzeichnet, dass** ein hydraulischer Zwischenspeicher (50) an den Fluidkreislauf (35, 51) angeschlossen ist.

8. System aus einer Mehrzahl von Pitchantrieben (23, 24, 25), wobei ein erster Pitchantrieb (23) einen ersten Elektromotor (28) zum Antreiben einer Drehbewegung zwischen einem ersten Rotorblatt (17) und einer Rotornabe (22) sowie einen durch eine Drehbewegung zwischen dem ersten Rotorblatt (17) und der Rotornabe (22) angetriebene erste Hydraulikpumpe (30) aufweist, und wobei ein zweiter Pitchantrieb (24) einen zweiten Elektromotor zum Antreiben einer Drehbewegung zwischen einem zweiten Rotorblatt (18) und der Rotornabe (22) sowie einen durch eine Drehbewegung zwischen dem zweiten Rotorblatt (18) und der Rotornabe (22) angetriebene zweite Hydraulikpumpe (30) aufweist, und wobei eine hydraulische Verbindungsleitung (42, 43, 44) sich zwischen der ersten Hydraulikpumpe (30) des ersten Pitchantriebs (23) und der zweiten Hydraulikpumpe (30) des zweiten Pitchantriebs (24) erstreckt.

9. System nach Anspruch 8, **dadurch gekennzeichnet, dass** die Pitchantriebe (23, 24, 25) jeweils einen kleinen Fluidkreislauf (35) aufweisen und dass ein großer Fluidkreislauf (41) sich durch einen ersten Pitchantrieb (23) und einen zweiten Pitchantrieb (24) erstreckt, wobei insbesondere ein erstes Schaltventil (36) in dem kleinen Fluidkreislauf (35) und ein zweites Schaltventil (45) in dem großen Fluidkreislauf angeordnet ist.

10. System nach Anspruch 8 oder 9, **gekennzeichnet durch** eine Steuereinheit (31), die dazu ausgelegt ist, die ersten Schaltventile (36), die zweiten Schaltventile (45) und die Elektromotoren (28) anzusteuern.

11. Verfahren zum Betreiben eines Pitchantriebs einer Windenergieanlage, bei dem ein Rotorblatt (17, 18, 19) mit einem Elektromotor (28) relativ zu einer Rotornabe (22) gedreht wird und bei dem durch die Drehbewegung zwischen dem Rotorblatt (17, 18, 19) und der Rotornabe (22) eine Hydraulikpumpe (30) angetrieben wird, und bei dem die Hydraulikpumpe (30) in wenigstens einem Betriebszustand gegen einen hydraulischen Widerstand (36, 37, 38, 45, 25) arbeitet.

12. Verfahren zum Betreiben einer Mehrzahl von Pitchantrieben (23, 24, 25), bei dem ein erstes Rotorblatt (17) mit einem ersten Elektromotor (28) relativ zu einer Rotornabe (22) gedreht wird und bei dem durch die Drehbewegung zwischen dem ersten Rotorblatt (17) und der Rotornabe (22) eine erste Hydraulikpumpe (30) angetrieben wird, und bei dem ein zweites Rotorblatt (18) mit einem zweiten Elektromotor (28) relativ zu der Rotornabe (22) gedreht wird und bei dem durch die Drehbewegung zwischen dem zweiten Rotorblatt (18) und der Rotornabe (22) eine zweite Hydraulikpumpe (30) angetrieben wird, und wobei die ersten Hydraulikpumpe (30) und die zweite Hydraulikpumpe (30) durch eine hydraulische Verbindungsleitung (42, 43, 44) verbunden sind und wobei in wenigstens einem Betriebszustand Hydrauliköl von der ersten Hydraulikpumpe (30) zu der zweiten Hydraulikpumpe (30) gepumpt wird.

## Claims

1. Pitch drive for a rotor blade (17, 18, 19) of a wind turbine, having an electric motor (28) for driving a rotational movement between the rotor blade (17, 18, 19) and a rotor hub (22), having a hydraulic pump (30) which is driven by the rotational movement between the rotor blade (17, 18, 19) and the rotor hub (22), wherein, in at least one operating state, the hydraulic pump (30) works counter to a hydraulic resistance (36, 37, 38, 45, 25).

2. Pitch drive according to Claim 1, **characterized in that** the hydraulic pump (30) is incorporated into a fluid circuit (35, 41) which extends from an outlet (33) of the hydraulic pump (30) to an inlet (34) of the hydraulic pump (30).

3. Pitch drive according to Claim 1 or 2, **characterized in that**, in the fluid circuit (35, 41), there is arranged a switching valve (35, 41) which, in a first switching state, blocks the throughflow and, in a second switching state, allows the throughflow, wherein in particular in the first switching state of the switching valve (35, 41), the fluid circuit (35, 41) is blocked, so that the hydraulic pump (30) works counter to a hydraulic blockage.

4. Pitch drive according to Claim 3, **characterized by** a control unit (31) which opens the switching valve (36) if the electric motor (28) is in operation and which closes the switching valve (36) if the electric motor (28) is not in operation.

5. Pitch drive according to Claim 3 or 4, **characterized by** a relief valve (37) which is arranged in the fluid circuit (35) parallel to the switching valve (36), and/or by a switchable throttle (38) which is arranged in the fluid circuit (35) parallel to the switching valve (36).

6. Pitch drive according to one of Claims 1 to 5, **characterized in that** the hydraulic pump (30) is coupled to a motor shaft (29) of the electric motor (28) .

7. Pitch drive according to one of Claims 1 to 6, **characterized in that** a hydraulic intermediate accumulator (50) is connected to the fluid circuit (35, 51).

8. System made up of a plurality of pitch drives (23, 24, 25), wherein a first pitch drive (23) has a first electric motor (28) for driving a rotational movement between a first rotor blade (17) and a rotor hub (22) and has a first hydraulic pump (30) which is driven by a rotational movement between the first rotor blade (17) and the rotor hub (22), and wherein a second pitch drive (24) has a second electric motor for driving a rotational movement between a second rotor blade (18) and the rotor hub (22) and has a second hydraulic pump (30) which is driven by a rotational movement between the second rotor blade (18) and the rotor hub (22), and wherein a hydraulic connecting line (42, 43, 44) extends between the first hydraulic pump (30) of the first pitch drive (23) and the second hydraulic pump (30) of the second pitch drive (24).

9. System according to Claim 8, **characterized in that** the pitch drives (23, 24, 25) each have a small fluid circuit (35), and **in that** a large fluid circuit (41) extends through a first pitch drive (23) and a second pitch drive (24), wherein in particular a first switching valve (36) is arranged in the small fluid circuit (35) and a second switching valve (45) is arranged in the large fluid circuit.

10. System according to Claim 8 or 9, **characterized by** a control unit (31) which is configured to control the first switching valves (36), the second switching valves (45) and the electric motors (28).

11. Method for operating a pitch drive of a wind turbine, in which a rotor blade (17, 18, 19) is rotated relative to a rotor hub (22) by way of an electric motor (28) and in which a hydraulic pump (30) is driven by the rotational movement between the rotor blade (17, 18, 19) and the rotor hub (22), and in which, in at least one operating state, the hydraulic pump (30) works counter to a hydraulic resistance (36, 37, 38, 45, 25).

12. Method for operating a plurality of pitch drives (23, 24, 25), in which a first rotor blade (17) is rotated relative to a rotor hub (22) by way of a first electric motor (28) and in which a first hydraulic pump (30) is driven by the rotational movement between the first rotor blade (17) and the rotor hub (22), and in which a second rotor blade (18) is rotated relative to the rotor hub (22) by way of a second electric motor (28) and in which a second hydraulic pump (30) is driven by the rotational movement between the second rotor blade (18) and the rotor hub (22), and wherein the first hydraulic pump (30) and the second hydraulic pump (30) are connected by a hydraulic connecting line (42, 43, 44), and wherein, in at least one operating state, hydraulic oil is pumped from the first hydraulic pump (30) to the second hydraulic pump (30) .

## Revendications

1. Entraînement de pas pour une pale de rotor (17, 18, 19) d'une éolienne, comprenant un moteur électrique (28) servant à l'entraînement d'un mouvement de rotation entre la pale de rotor (17, 18, 19) et un moyeu de rotor (22), comprenant une pompe hydraulique (30) qui est entraînée par le mouvement de rotation entre la pale de rotor (17, 18, 19) et le moyeu de rotor (22), la pompe hydraulique (30) travaillant à l'encontre d'une résistance hydraulique (36, 37, 38, 45, 25) dans au moins un état de fonctionnement.

2. Entraînement de pas selon la revendication 1, **caractérisé en ce que** la pompe hydraulique (30) est intégrée dans un circuit de fluide (35, 41) qui s'étend d'une sortie (33) de la pompe hydraulique (30) à une entrée (34) de la pompe hydraulique (30).

3. Entraînement de pas selon la revendication 1 ou 2, **caractérisé en ce qu'**une soupape de commutation (35, 41) est disposée dans le circuit de fluide (35, 41), laquelle bloque l'écoulement dans un premier état de commutation et libère l'écoulement dans un deuxième état de commutation, le circuit de fluide (35, 41), en particulier dans le premier état de commutation de la soupape de commutation (35, 41), étant bloqué de telle sorte que la pompe hydraulique (30) travaille à l'encontre d'un blocage hydraulique.

4. Entraînement de pas selon la revendication 3, **caractérisé par** une unité de commande (31) qui ouvre la soupape de commutation (36) lorsque le moteur électrique (28) est en fonctionnement, et ferme la soupape de commutation (36) lorsque le moteur électrique (28) n'est pas en fonctionnement.

5. Entraînement de pas selon la revendication 3 ou 4, **caractérisé par** une soupape de décharge (37) qui est disposée dans le circuit de fluide (35) parallèlement à la soupape de commutation (36) et/ou par un étranglement (38) pouvant être commuté, qui est disposé dans le circuit de fluide (35) parallèlement à la soupape de commutation (36).

6. Entraînement de pas selon l'une des revendications 1 à 5, **caractérisé en ce que** la pompe hydraulique (30) est accouplée à un arbre (29) du moteur électrique (28).

7. Entraînement de pas selon l'une des revendications 1 à 6, **caractérisé en ce qu'**un accumulateur intermédiaire hydraulique (50) est raccordé au circuit de fluide (35, 51) .

8. Système constitué d'une pluralité d'entraînements de pas (23, 24, 25), un premier entraînement de pas (23) comprenant un premier moteur électrique (28) servant à l'entraînement d'un mouvement de rotation entre une première pale de rotor (17) et un moyeu de rotor (22), ainsi qu'une première pompe hydraulique (30) entraînée par un mouvement de rotation entre la première pale de rotor (17) et le moyeu de rotor (22), et un deuxième entraînement de pas (24) comprenant un deuxième moteur électrique servant à l'entraînement d'un mouvement de rotation entre une deuxième pale de rotor (18) et le moyeu de rotor (22), ainsi qu'une deuxième pompe hydraulique (30) entraînée par un mouvement de rotation entre la deuxième pale de rotor (18) et le moyeu de rotor (22), et une conduite de liaison hydraulique (42, 43, 44) s'étendant entre la première pompe hydraulique (30) du premier entraînement de pas (23) et la deuxième pompe hydraulique (30) du deuxième entraînement de pas (24).

9. Système selon la revendication 8, **caractérisé en ce que** les entraînements de pas (23, 24, 25) présentent respectivement un petit circuit de fluide (35) et **en ce qu'**un grand circuit de fluide (41) s'étend à travers un premier entraînement de pas (23) et un deuxième entraînement de pas (24), en particulier une première soupape de commutation (36) étant disposée dans le petit circuit de fluide (35) et une deuxième soupape de commutation (45) étant disposée dans le grand circuit de fluide.

10. Système selon la revendication 8 ou 9, **caractérisé par** une unité de commande (31) qui est conçue pour commander les premières soupapes de commutation (36), les deuxièmes soupapes de commutation (45) et les moteurs électriques (28).

11. Procédé de fonctionnement d'un entraînement de pas d'une éolienne, dans lequel une pale de rotor (17, 18, 19) est entraînée en rotation par rapport à un moyeu de rotor (22) à l'aide d'un moteur électrique (28) et dans lequel une pompe hydraulique (30) est entraînée par le mouvement de rotation entre la pale de rotor (17, 18, 19) et le moyeu de rotor (22), et dans lequel la pompe hydraulique (30) travaille à l'encontre d'une résistance hydraulique (36, 37, 38, 45, 25) dans au moins un état de fonctionnement.

12. Procédé de fonctionnement d'une pluralité d'entraînements de pas (23, 24, 25), dans lequel une première pale de rotor (17) est entraînée en rotation par rapport à un moyeu de rotor (22) à l'aide d'un premier moteur électrique (28) et dans lequel une première pompe hydraulique (30) est entraînée par le mouvement de rotation entre la première pale de rotor (17) et le moyeu de rotor (22), et dans lequel une deuxième pale de rotor (18) est entraînée en rotation par rapport au moyeu de rotor (22) à l'aide d'un deuxième moteur électrique (28) et dans lequel une deuxième pompe hydraulique (30) est entraînée par le mouvement de rotation entre la deuxième pale de rotor (18) et le moyeu de rotor (22), et la première pompe hydraulique (30) et la deuxième pompe hydraulique (30) étant reliées par le biais d'une conduite de liaison hydraulique (42, 43, 44) et, dans au moins un état de fonctionnement, de l'huile hydraulique étant pompée de la première pompe hydraulique (30) à la deuxième pompe hydraulique (30).
